# EUROPÄISCHE PATENTSCHRIFT

(11) **EP 3 914 562 B1**
(45) Veröffentlichungstag und Bekanntmachung des Hinweises auf die Patenterteilung: **18.02.2026**
(21) Anmeldenummer: 20701572.8
(22) Anmeldetag: 21.01.2020
(51) Int. Cl.: C02F 3/00, C02F 1/461, C02F 101/30

(54) **REAKTOR ZUR ELEKTROCHEMISCHEN BEHANDLUNG VON FLÜSSIGKEITEN, INSBESONDERE ORGANISCH BELASTETER ABWÄSSER, UND DESSEN VERWENDUNG**
REACTOR FOR THE ELECTROCHEMICAL TREATMENT OF LIQUIDS, IN PARTICULAR ORGANICALLY CONTAMINATED WASTEWATER, AND USE THEREOF
RÉACTEUR DE TRAITEMENT ÉLECTROCHIMIQUE DE LIQUIDES, NOTAMMENT D'EAUX USÉES À CONTAMINATION ORGANIQUE ET SON UTILISATION

(30) Priorität: 22.01.2019 DE 102019101483
(43) Veröffentlichungstag der Anmeldung: 01.12.2021
(73) Patentinhaber: Whitecell Eisenhuth GmbH & Co. KG, 37520 Osterode (DE); Technische Universität Clausthal, 38678 Clausthal-Zellerfeld (DE)
(72) Erfinder: SIEVERS, Michael, 38678 Clausthal-Zellerfeld (DE); KUNZ, Ulrich, 37520 Osterode (DE); HICKMANN, Thorsten, 37520 Osterode (DE)
(74) Vertreter: REHBERG HÜPPE + PARTNER
(86) Internationale Anmeldenummer: PCT/EP2020/051375
(87) Internationale Veröffentlichungsnummer: WO 2020/152144

(56) Entgegenhaltungen:
- CN-A- 105 347 464
- US-A1- 2014 069 806

## Beschreibung

### TECHNISCHES GEBIET DER ERFINDUNG

Die Erfindung bezieht sich auf einen Reaktor zur elektrochemischen Behandlung einer Flüssigkeit, insbesondere zur bioelektrochemischen Behandlung eines organisch belasteten Abwassers, der eine Führung für die Flüssigkeit durch einen Reaktionsraum, eine Elektrodenanordnung in dem Reaktionsraum und einen Drehantrieb aufweist, welcher dazu ausgebildet ist, die Elektrodenanordnung um eine ortsfeste Drehachse gegenüber der Führung zu verdrehen.

Weiterhin bezieht sich die Erfindung auf eine Verwendung eines solchen Reaktors zur elektrochemischen Behandlung einer Flüssigkeit, insbesondere zur bioelektrochemischen Behandlung eines organisch belasteten Abwassers, bei der die in die Flüssigkeit eintauchende Elektrodenanordnung gegenüber der Führung für die Flüssigkeit um die ortsfeste Drehachse gedreht wird.

### STAND DER TECHNIK

Aus der DE 10 2016 109 606 A1 sind ein Verfahren und eine Vorrichtung zur bioelektrischen Stromgewinnung aus organischen Inhaltsstoffen eines Abwassers bekannt. In das Abwasser, das zumindest intermittierend in einer Flussrichtung fließt, werden eine Anode und eine mit der Anode elektrisch verbundenen Kathode eingetaucht, wobei die Kathode flussab der Anode liegt und zwischen der Anode und der Kathode eine protonendurchlässige Membran angeordnet ist. Eine zwischen der Kathode und der Anode anliegende Spannung wird mit einem bei der Anode und der Kathode angeordneten DC/DC-Wandler auf eine höhere Spannung hochgesetzt. Konkret taucht die plattenförmige Anode vertikal in einen Kanal ein, der seitlich durch die protonendurchlässige Membran begrenzt ist, wobei die Kathode auf der der Anode abgekehrten Seite der Membran angeordnet ist. Der Kanal führt das Abwasser die Anode entlang. Aus dem Kanal tritt das Abwasser in ein Belebungsbecken ein, in dem es zumindest intermittierend belüftet wird und mit der Kathode in Kontakt tritt. Durch die Stromgewinnung aus den organischen Inhaltsstoffen des Abwassers werden diese organischen Inhaltsstoffe abgebaut.

Aus der EP 3 401 986 A1 sind eine Gasdiffusionselektrode für Biobrennstoffzellen und eine Biobrennstoffzelle mit einer solchen Gasdiffusionselektrode für die Stromgewinnung aus Abwasser bekannt. Die Gasdiffusionselektrode taucht in das Abwasser ein, wobei sie einen Luftraum begrenzt, über den ihrer Kathode Sauerstoff zugeführt wird.

Aus Shuiliang Chen et al.: "A high-performance rotating graphite fiber brush air-cathode for microbial fuel cells", Applied Energy 211 (2018) 1089-1094, available online 18 December 2017, ist eine Biobrennstoffzelle bekannt, bei der eine bürstenförmige rotierende Luftkathode stromab einer Anode teilweise in eine Strömung eines Abwassers eintaucht. Die Luftkathode rotiert um eine horizontale Achse, die auf Höhe des Wasserspiegels des Abwassers angeordnet ist. Die Versorgung dieser Luftkathode mit Sauerstoff erfolgt in ihrem aktuell nicht in das Abwasser eintauchenden Bereich.

A. Noyola et al.: "Anaerobic treatment of domestic sewage with a rotating-stationary fixed-film reactor", Wat. Res. Vol. 22, No. 12, 1585-1592, 1988 beschreiben einen Reaktor zur anaeroben Abwasserbehandlung mit einem Reaktorgehäuse, das einen Reaktionsraum umschließt, und mit mehreren tellerförmigen Substraten für das Aufwachsen eines Biofilms in dem Reaktorraum. Die tellerförmigen Substrate sind untereinander beabstandet auf einer zentralen vertikal ausgerichteten Welle befestigt, und sie werden mithilfe dieser Welle gegenüber dem Reaktorgehäuse verdreht, um eine Relativbewegung der Substrate gegenüber dem den Reaktionsraum ausfüllenden Abwasser herbeizuführen.

Aus der US 2014/ 0 069 806 A1 sind bioelektrochemische Systeme zur Behandlung von Wasser bekannt, bei denen Luftkathoden Verwendung finden. In einer Ausführungsform der Systeme sind auf einer horizontal ausgerichteten Hohlwelle scheibenförmige Reaktorgehäuse angeordnet, die jeweils einen Reaktorraum begrenzen. In jedem Reaktorraum ist eine scheibenförmige Anodenelektrode zwischen zwei scheibenförmigen Kathodenelektroden angeordnet. Über die Hohlwelle wird das zu behandelnde Wasser durch sich von der Hohlwelle radial weiter weg erstreckende Zuleitungen zugeführt und über kürzere zu der Hohlwelle zurückführende Ableitungen abgeführt. In einer Variante dieser Ausführungsform grenzen Membranelektrodenanordnungen (MEA) der Kathoden rückwärtig an die den Reaktorraum umgebende Atmosphäre an, so dass die Kathoden mit Luft aus der Atmosphäre versorgt werden und die Membranelektrodenanordnungen der Kathoden Teile des Reaktorgehäuses ausbilden.

Aus der CN 105347464 A ist ein Reaktor zur Behandlung von Flüssigkeit mit einer in die Flüssigkeit eintauchenden Elektrodenanordnung bekannt. Scheibenförmige Elektroden und Hohlfasermembranen sind auf einer Hohlwelle angeordnet. Über die Hohlwelle wird die Flüssigkeit durch die Hohlfasermembranen hindurch zugeführt. Luft wird durch Löcher in der Hohlwelle zugeführt.

### AUFGABE DER ERFINDUNG

Der Erfindung liegt die Aufgabe zugrunde, einen Reaktor zur elektrochemischen Behandlung einer Flüssigkeit, insbesondere zur bioelektrochemischen Behandlung eines organisch belasteten Abwassers, und eine Verwendung eines solchen Reaktors aufzuzeigen, die einen besonders hohen Wirkungsgrad aufweisen.

### LÖSUNG

Die Aufgabe der Erfindung wird durch einen Reaktor mit den Merkmalen des unabhängigen Patentanspruchs 1 und durch die Verwendung mit den Merkmalen des Patentanspruchs 14 gelöst. In den abhängigen Patentansprüchen 2 bis 13 sind bevorzugte Ausführungsformen des erfindungsgemäßen Reaktors definiert.

### BESCHREIBUNG DER ERFINDUNG

Ein erfindungsgemäßer Reaktor zur elektrochemischen Behandlung einer Flüssigkeit, insbesondere zur bioelektrochemischen Behandlung eines organisch belasteten Abwassers, weist eine Führung für die Flüssigkeit durch einen Reaktionsraum, eine Elektrodenanordnung in dem Reaktionsraum und einen Drehantrieb auf, der dazu ausgebildet ist, die Elektrodenanordnung um eine ortsfeste Drehachse gegenüber der Führung zu verdrehen. Dabei ist der Reaktionsraum von einem Reaktorgehäuse umschlossen, und die Elektrodenanordnung umfasst eine scheibenförmige Gasdiffusionselektrode, die dazu ausgebildet und angeschlossen ist, ein Prozessgas der elektrochemischen Behandlung zu- und/oder abzuführen.

Der von dem Reaktorgehäuse umschlossene Reaktionsraum kann vollständig mit der Flüssigkeit befüllt werden, so dass die in dem Reaktionsraum angeordnete Elektrodenanordnung vollständig in die Flüssigkeit eintaucht. Die scheibenförmige Gasdiffusionselektrode ist in der Elektrodenanordnung regelmäßig so angeordnet, dass ihre Oberflächen längs ihrer Relativbewegung gegenüber dem Reaktorgehäuse verlaufen, die sich durch die mit dem Drehantrieb angetriebene Drehbewegung der Elektrodenanordnung ergibt. Dies schließt aber nicht aus, dass die Gasdiffusionselektrode ganz oder bereichsweise einen Anstellwinkel zu dieser Relativbewegungsrichtung aufweist.

Um das vollständige Eintauchen der scheibenförmigen Gasdiffusionselektrode in die Flüssigkeit in dem Reaktionsraum sicherzustellen, kann ein Füllstandssensor vorgesehen sein, der einen oberhalb der Gasdiffusionselektrode liegenden Sollfüllstand des Reaktorgehäuses mit der Flüssigkeit überwacht. Wenn dieser Sollfüllstand unterschritten wird, kann beispielsweise automatisch zusätzliche Flüssigkeit in den Reaktionsraum eingepumpt werden.

Bei dem erfindungsgemäßen Reaktor weist die Elektrodenanordnung eine gasführende Hohlwelle auf. Diese gasführende Hohlwelle ist einerseits an einen Prozessgasanschluss und andererseits an die Gasdiffusionselektrode angeschlossen. Mit der gasführenden Hohlwelle ist ein geschlossenes Gasführungssystem für das Prozessgas ausbildbar, so dass ein abzuführendes Prozessgas auch mithilfe eines Unterdrucks beschleunigt abführbar ist, ebenso wie ein zuzuführendes Prozessgas mithilfe eines Überdrucks beschleunigt zuzuführen ist. Dadurch kann die Kinetik der gewünschten elektrochemischen Behandlung in dem erfindungsgemäßen Reaktor beschleunigt werden.

Bei dem erfindungsgemäßen Reaktor ist die Hohlwelle gegenüber einer Horizontalen zu einem Flüssigkeitsablauf hin geneigt, so dass in die Hohlwelle eintretende und/oder dort kondensierende Flüssigkeit zu dem Flüssigkeitsablauf hin abläuft und so aus der Hohlwelle abgeführt werden kann.

Typischerweise ist bei dem erfindungsgemäßen Reaktor eine Gegenelektrode in einem Abstand in Richtung der Drehachse parallel zu der Gasdiffusionselektrode angeordnet. Vielfach wird dabei zwischen der Gasdiffusionselektrode und der Gegenelektrode eine semipermeable Membran angeordnet sein, die die Selektivität der gewünschten elektrochemischen Behandlung sicherstellt und beispielsweise ausschließlich für Protonen durchlässig ist. Diese semipermeable Membran kann konkret als Beschichtung der Gasdiffusionselektrode und/oder der Gegenelektrode ausgebildet sein.

Die Gasdiffusionselektrode und Gegenelektrode des erfindungsgemäßen Reaktors werden an elektrische Einrichtungen angeschlossen, die dazu ausgebildet sein können, eine äußere Spannung zwischen der Gasdiffusionselektrode und der Gegenelektrode anzulegen oder dort abzugreifen. So kann entweder eine elektrolytische Behandlung der jeweiligen Flüssigkeit erfolgen, bei der ein Strom in die Flüssigkeit getrieben wird, oder eine Behandlung unter Stromgewinnung.

Die Gegenelektrode kann bei dem erfindungsgemäßen Reaktor ortsfest gegenüber dem Reaktorgehäuse angeordnet sein, so dass sie nicht Teil der Elektrodenanordnung ist, die gegenüber dem Reaktorgehäuse verdreht wird. Vielmehr wird dann mit dem Verdrehen der Elektrodenanordnung auch eine Relativbewegung zwischen der Gasdiffusionselektrode und der Gegenelektrode hervorgerufen. Bevorzugt ist es jedoch, wenn die Gegenelektrode Teil der Elektrodenanordnung ist und ortsfest gegenüber der Gasdiffusionselektrode angeordnet ist, so dass sie zusammen mit der Gasdiffusionselektrode gegenüber dem Reaktorgehäuse verdreht wird. Dies hat u. a. den Vorteil, dass die elektrischen Einrichtungen mit in der Summe kürzeren Zuleitungen an die Elektrode und die Gegenelektrode anschließbar sind. Dies ist insbesondere im Hinblick auf die kleinen Spannungen, die bei einer Stromgewinnung mithilfe des erfindungsgemäßen Reaktors auftreten, von Vorteil.

Besonders bevorzugt sind die elektrischen Einrichtungen in der Hohlwelle der Elektrodenanordnung angeordnet und damit besonders nah an der Gasdiffusionselektrode und der Gegenelektrode.

Typischerweise sind bei dem erfindungsgemäßen Reaktor in Richtung der Drehachse mehrere Gasdiffusionselektroden und Gegenelektroden wechselweise hintereinander angeordnet, um die Gesamtelektrodenfläche zu vergrößern, ohne dass in den einzelnen Elektroden bereits lange Stromleitungswege auftreten. Es versteht sich, dass bei mehreren Gasdiffusionselektroden möglichst alle Gasdiffusionselektroden vollständig in die Flüssigkeit eingetaucht werden.

Jede Gegenelektrode kann bei dem erfindungsgemäßen Reaktor aus einem elektrisch leitfähigen Kunststoff ausgebildet sein. Dadurch weist sie eine hohe Lebensdauer auf und aufwachsende Biofilme lassen sich vergleichsweise leicht - bedarfsweise auch unter Deformation der Gegenelektrode - entfernen.

Die Führung für die Flüssigkeit durch den Reaktionsraum kann so ausgebildet sein, dass sie die Flüssigkeit zwischen der Gasdiffusionselektrode und der Gegenelektrode hindurchführt, und zwar insbesondere radial zu der Drehachse, um die die Elektrodenanordnung gegenüber dem Reaktorgehäuse gedreht wird. Hierdurch wird eine zusätzliche Relativbewegungskomponente der Flüssigkeit gegenüber der Elektrodenanordnung hervorgerufen. Konkret kann die Führung zwischen die Gasdiffusionselektrode und die Gegenelektrode eingreifende, nicht elektrisch leitfähige Führungselemente aufweisen. Diese Führungselemente können insbesondere eine zumindest im Wesentlichen radial zu der Drehachse verlaufende Erstreckung aufweisen. So kann die Flüssigkeit zwischen jeweils zwei solcher Führungselemente in Richtung zu der Drehachse strömen und in einem anderen Zwischenraum zwischen den Führungselementen von der Drehachse weg abströmen.

Bei dem erfindungsgemäßen Reaktor kann die Gasdiffusionselektrode insbesondere zum Anschluss an eine Gasquelle für ein sauerstoffhaltiges Gas ausgebildet sein. Dieses sauerstoffhaltige Gas kann Luft oder Druckluft, aber auch ein gegenüber normaler Luft mit Sauerstoff angereichertes Gas sein.

Bei einer erfindungsgemäßen Verwendung des erfindungsgemäßen Reaktors zur elektrochemischen Behandlung einer Flüssigkeit, insbesondere zur bioelektrochemischen Behandlung eines organisch belasteten Abwassers, wird die in die Flüssigkeit eintauchende Elektrodenanordnung gegenüber der Führung für die Flüssigkeit um die ortsfeste Drehachse gedreht. Dabei taucht die scheibenförmige Gasdiffusionselektrode der Elektrodenanordnung vollständig in die Flüssigkeit ein, und ein Prozessgas der elektrochemischen Behandlung wird über die Gasdiffusionselektrode zu- und/oder abgeführt.

Bei der erfindungsgemäßen Verwendung wird die Gasdiffusionselektrode, mit deren Hilfe das jeweilige Prozessgas der elektrochemischen Behandlung besonders effizient zu- und/oder abgeführt werden kann, mit einer Rotation der Elektrodenanordnung gegenüber der Führung für die Flüssigkeit kombiniert, die eine Relativbewegung der Elektrodenanordnung gegenüber der Flüssigkeit und damit einen schnellen Austausch der behandelten Flüssigkeit mit noch unbehandelter Flüssigkeit sicherstellt. Hierdurch wird eine hoch effiziente elektrochemische Behandlung der Flüssigkeit erreicht. Es versteht sich, dass ein Drehen der Elektrodenanordnung gegenüber der Führung für die Flüssigkeit nicht nur dadurch erreicht wird, dass die Elektrodenanordnung gegenüber einer ortsfesten Führung für die Flüssigkeit gedreht wird, sondern auch dadurch, dass die Führung gegenüber der ortsfesten Elektrodenanordnung gedreht wird. Letzteres ist in der Regel jedoch sowohl technisch als auch energetisch aufwändiger, so dass bei der erfindungsgemäßen Verwendung in der Regel die Elektrodenanordnung gegenüber einer ortsfesten Führung für die Flüssigkeit gedreht werden wird. Weiterhin ist die erfindungsgemäße Verwendung sowohl für eine elektrochemische Behandlung der jeweiligen Flüssigkeit geeignet, bei der durch einen erfolgenden elektrochemischen Prozess Strom gewonnen wird, als auch für eine elektrochemische Behandlung, bei der mit einer externen Spannungsquelle ein elektrischer Strom hervorgerufen wird, um beispielsweise bestimmte Inhaltsstoffe der jeweiligen Flüssigkeit elektrolytisch zu zersetzen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Elektrode die Rede ist, ist dies so zu verstehen, dass genau eine Elektrode, zwei Elektroden oder mehr Elektroden vorhanden sind. Die in den Patentansprüchen aufgeführten Merkmale der Erfindung können durch andere Merkmale ergänzt werden oder die einzigen Merkmale sein, die der jeweilige Reaktor oder dessen Verwendung aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein Axialschnitt durch einen ersten, als solches nicht unter die Patentansprüche fallenden Reaktor.
- **Fig. 2**: ist ein Axialschnitt durch einen zweiten, erfindungsgemäßen Reaktor.
- **Fig. 3**: ist ein Radialschnitt durch einen dritten, als solches nicht unter die Patentansprüche fallenden Reaktor.
- **Fig. 4**: zeigt ein Detail des Reaktors gemäß Fig. 3 in einem Axialschnitt.

### FIGURENBESCHREIBUNG

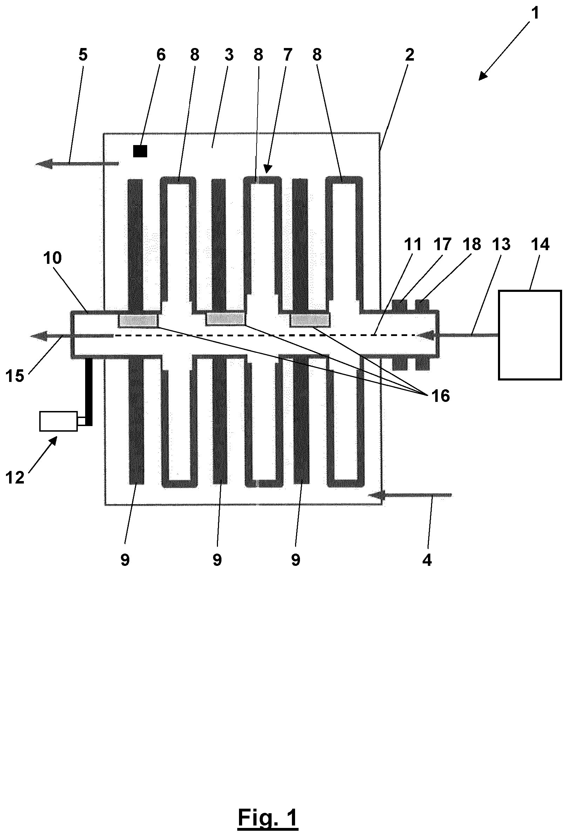

Der in **Fig. 1** gezeigte Reaktor 1 weist ein Reaktorgehäuse 2 auf. Das Reaktorgehäuse 2 begrenzt einen Reaktionsraum 3. In den Reaktionsraum 3 führt ein Zulauf 4 für eine in dem Reaktor 1 zu behandelnde Flüssigkeit. Weiterhin ist ein Ablauf 5 für diese Flüssigkeit vorhanden. Mit einem Füllstandssensor 6 wird ein Füllstand des Reaktionsraums 3 mit der Flüssigkeit auf Einhaltung überwacht. Dabei liegt der Füllstandssensor 6 oberhalb einer Elektrodenanordnung 7 in dem Reaktionsraum 3. Die Elektrodenanordnung 7 umfasst scheibenförmige Gasdiffusionselektroden 8 und dazwischen angeordnete Gegenelektroden 9, die sämtlich drehfest an einer zentralen Hohlwelle 10 befestigt sind. Die Hohlwelle 10 ist gegenüber dem Reaktorgehäuse 2 um eine Drehachse 11 drehbar gelagert, und ein Drehantrieb 12 ist zum Drehen der Hohlwelle 10 mit der Elektrodenanordnung 7 um die Drehachse 11 vorgesehen. Während der Zulauf 4, der Reaktionsraum 3 und der Ablauf 5 als Führung für die zu behandelnde Flüssigkeit dienen, dient die Hohlwelle 10 als Gasführung für ein Prozessgas der elektrochemischen Behandlung der Flüssigkeit zu den Gasdiffusionselektroden 8 und/oder von diesen weg. Die Hohlwelle 10 ist dazu an eine Gaszufuhr 13 von einer Gasquelle 14 und an eine Gasabfuhr 15 angeschlossen, die jeweils als Prozessgasanschluss dienen können, um ein Prozessgas zu- und/oder abzuführen. In der Hohlwelle 10 sind weiterhin elektrische Einrichtungen 16 angeordnet, an die jeweils eine der Gasdiffusionselektroden 8 und eine der Gegenelektroden 9 mit kurzen Zuleitungen angeschlossen sind und die von außerhalb der Hohlwelle über Schleifkontakte 17 und 18 elektrisch kontaktierbar sind. Im Betrieb des Reaktors 1 taucht die gesamte Elektrodenanordnung 7 mit den Gasdiffusionselektroden 8 und den Gegenelektroden 9 in dem Reaktionsraum 3 in die zu behandelnde Flüssigkeit ein, und die Elektrodenanordnung 7 wird gegenüber dem Reaktorgehäuse 2 und damit gegenüber der Flüssigkeit verdreht, um den Austausch der Flüssigkeit an den Oberflächen der Gasdiffusionselektroden 8 und Gegenelektroden 9 zu fördern. Zugleich wird mittels der Zu- bzw. Abfuhr des Prozessgases über die Hohlwelle 10 die Kinetik der Behandlung der Flüssigkeit in dem Reaktor 1 beschleunigt.

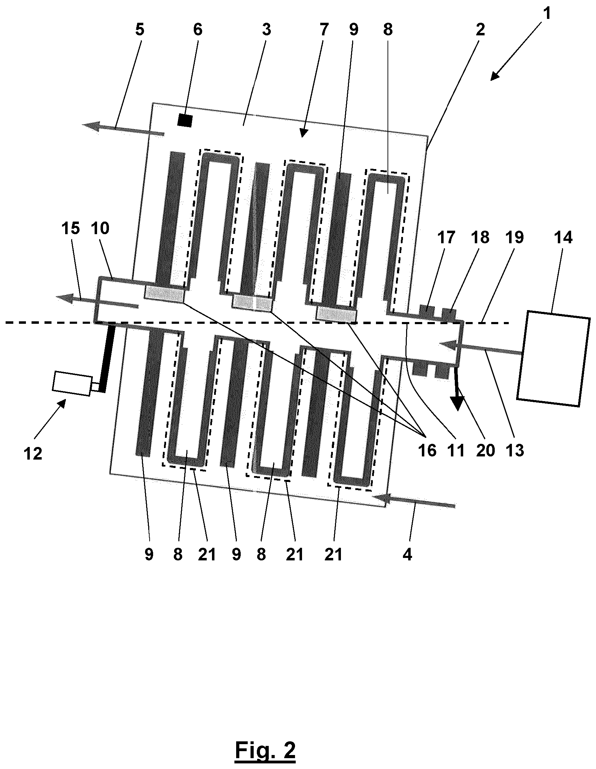

Der erfindungsgemäße Reaktor 1 gemäß **Fig. 2** unterscheidet sich in folgenden Details von dem Reaktor 1 gemäß Fig. 1. Während gemäß Fig. 1 die Drehachse 11 der Hohlwelle 10 horizontal verläuft, ist sie gemäß Fig. 2 gegenüber einer Horizontalen 19 um einige Grad zu einem Flüssigkeitsablauf 20 hin geneigt, so dass in die Hohlwelle 10 eingetretene Flüssigkeit bzw. darin kondensierte Flüssigkeit über einen Flüssigkeitsablauf 20 abführbar ist. Weiterhin ist in Fig. 2 mit gestrichelten Linien eine semipermeable Membran 21 wiedergegeben, die als Beschichtung der Gasdiffusionselektroden ausgebildet ist und damit zwischen den Gasdiffusionselektroden 8 und den Gegenelektroden 9 angeordnet ist.

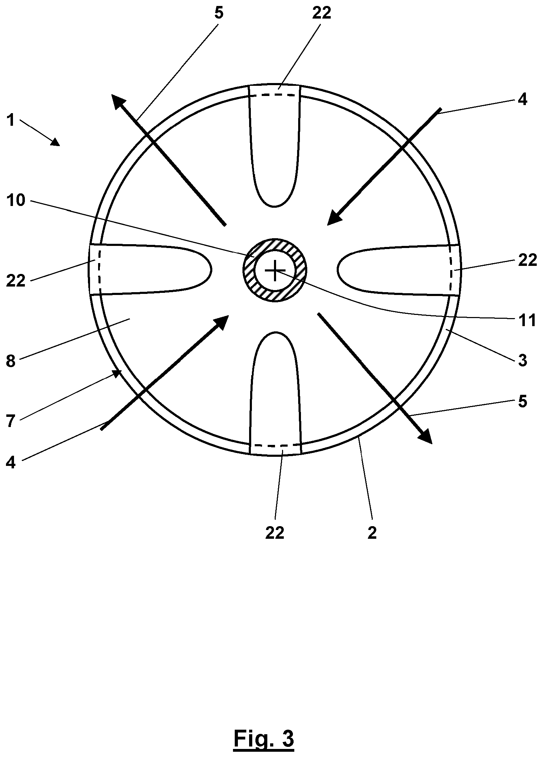

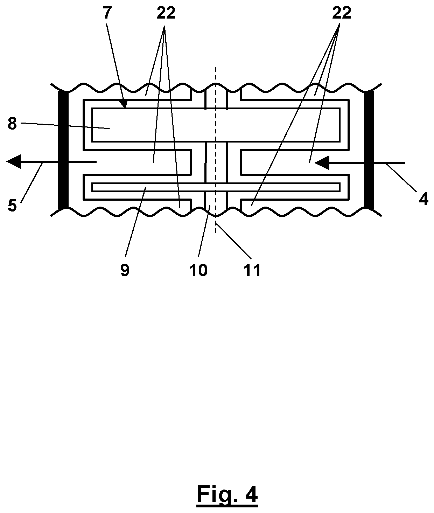

**Fig. 3** zeigt eine mögliche Anordnung von Führungselementen 22, die von dem Reaktorgehäuse 2 in den Reaktionsraum 3 vorstehen, und zwar wie aus **Fig. 4** hervorgeht bis zwischen die Gasdiffusionselektroden 8 und Gegenelektroden 9 der Elektrodenanordnung 7. Die Flüssigkeit wird über zwischen benachbarte Führungselemente 22 gebildete Kanäle über hier zwei getrennte Zuläufe 4 zugeführt und über zwischen anderen Paaren von Führungselementen 22 ausgebildete Kanäle über ebenfalls zwei getrennte Abläufe 5 abgeführt. Mit den Führungselementen 22 wird die Flüssigkeit entsprechend radial zu der Drehachse 11 und dann von der Drehachse 11 wieder radial weg geleitet. Durch die Drehbewegung der Elektrodenanordnung 7 um die Drehachse 11 wird eine zusätzliche Strömung der Flüssigkeit über die Gasdiffusionselektroden 8 und die Gegenelektroden 9 hinweg hervorgerufen. Zudem führt diese Drehbewegung der Elektrodenanordnung 7 gegenüber den Führungselementen dazu, dass die Führungselemente dickere auf den Gasdiffusionselektroden 8 und den Gegenelektroden 9 aufgewachsene Biofilme abstreifen. Darüber hinaus können die Führungselemente 22 auch dazu dienen, als solche nicht formsteife Gegenelektroden 9, beispielsweise aus flexiblem leitfähigen Kunststoff, in ihrer Ausrichtung parallel zu den Gasdiffusionselektroden 8 zu stabilisieren.

### BEZUGSZEICHENLISTE

- 1: Reaktor
- 2: Reaktorgehäuse
- 3: Reaktionsraum
- 4: Zulauf
- 5: Ablauf
- 6: Füllstandssensor
- 7: Elektrodenanordnung
- 8: Gasdiffusionselektrode
- 9: Gegenelektrode
- 10: Hohlwelle
- 11: Drehachse
- 12: Drehantrieb
- 13: Gaszufuhr
- 14: Gasquelle
- 15: Gasabfuhr
- 16: elektrische Einrichtung
- 17: Schleifkontakt
- 18: Schleifkontakt
- 19: Horizontale
- 20: Flüssigkeitsablauf
- 21: semipermeable Membran
- 22: Führungselement

## Patentansprüche

1. Reaktor (1) zur elektrochemischen Behandlung einer Flüssigkeit mit
- einer Führung für die Flüssigkeit durch einen Reaktionsraum (3),
- einer Elektrodenanordnung (7) in dem Reaktionsraum (3),
- einer Gegenelektrode (9), die Teil der Elektrodenanordnung (7) ist oder nicht, in dem Reaktionsraum (3) und
- einem Drehantrieb (12), der dazu ausgebildet ist, die Elektrodenanordnung (7) um eine ortsfeste Drehachse (11) gegenüber der Führung zu verdrehen,
- wobei der Reaktionsraum (3) von einem Reaktorgehäuse (2) umschlossen ist,
- wobei die Elektrodenanordnung (7) eine scheibenförmige Gasdiffusionselektrode (8) umfasst, die dazu ausgebildet und angeschlossen ist, ein Prozessgas der elektrochemischen Behandlung zu- und/oder abzuführen, und
- wobei die Elektrodenanordnung (7) eine gasführende Hohlwelle (10) aufweist, die einerseits an einen Prozessgasanschluss (13, 15) und andererseits an die Gasdiffusionselektrode (8) angeschlossen ist,
**dadurch gekennzeichnet,**
- **dass** die Hohlwelle (10) gegenüber einer Horizontalen (19) zu einem Flüssigkeitsablauf (20) hin geneigt ist.

2. Reaktor (1) nach Anspruch 1, **dadurch gekennzeichnet, dass** ein Füllstandssensor (6) dazu ausgebildet und angeordnet ist, einen Sollfüllstand des Reaktorgehäuses (2) mit der Flüssigkeit zu überwachen, der oberhalb der Gasdiffusionselektrode (8) liegt.

3. Reaktor (1) nach Anspruch 1 oder 2, **dadurch gekennzeichnet, dass** die Gegenelektrode (9) in einem Abstand in Richtung der Drehachse (11) parallel zu der Gasdiffusionselektrode (8) angeordnet ist.

4. Reaktor (1) nach einem der Ansprüche 1 bis 3, **dadurch gekennzeichnet, dass** zwischen der Gasdiffusionselektrode (8) und der Gegenelektrode (9) eine semipermeable Membran (21) angeordnet ist.

5. Reaktor (1) nach Anspruch 4, **dadurch gekennzeichnet, dass** die semipermeable Membran (21) als Beschichtung der Gasdiffusionselektrode (8) und/oder der Gegenelektrode (9) ausgebildet ist.

6. Reaktor (1) nach einem der Ansprüche 1 bis 5, **dadurch gekennzeichnet, dass** die Gasdiffusionselektrode (8) und die Gegenelektrode (9) an elektrische Einrichtungen (16) angeschlossen sind, wobei die elektrischen Einrichtungen (16) dazu ausgebildet sind, eine äußere Spannung zwischen der Gasdiffusionselektrode (8) und der Gegenelektrode (9) anzulegen oder abzugreifen.

7. Reaktor (1) nach einem der Ansprüche 1 bis 6, **dadurch gekennzeichnet, dass** die Gegenelektrode (9) Teil der Elektrodenanordnung (7) und ortsfest gegenüber der Gasdiffusionselektrode (8) angeordnet ist.

8. Reaktor (1) nach Anspruch 7, wenn abhängig von Anspruch 6, **dadurch gekennzeichnet, dass** die elektrische Einrichtungen (16) in der Hohlwelle (10) angeordnet sind.

9. Reaktor (1) nach einem der Ansprüche 1 bis 8, **dadurch gekennzeichnet, dass** in Richtung der Drehachse (11) mehrere Gasdiffusionselektroden (8) und Gegenelektroden (9) wechselweise hintereinander angeordnet sind.

10. Reaktor (1) nach einem der Ansprüche 1 bis 9, **dadurch gekennzeichnet, dass** die Gegenelektrode (9) aus einem elektrisch leitfähigen Kunststoff ausgebildet ist.

11. Reaktor (1) nach einem der Ansprüche 1 bis 10, **dadurch gekennzeichnet, dass** die Führung dazu ausgebildet und angeordnet ist, die Flüssigkeit zwischen der Gasdiffusionselektrode (8) und der Gegenelektrode (9) hindurch zu führen.

12. Reaktor (1) nach Anspruch 11, **dadurch gekennzeichnet, dass** zwischen die Gasdiffusionselektrode (8) und die Gegenelektrode (9) nicht elektrisch leitfähige Führungselemente (22) der Führung eingreifen, die eine radial zu der Drehachse (11) verlaufende Erstreckung aufweisen.

13. Reaktor (1) nach einem der Ansprüche 1 bis 12, **dadurch gekennzeichnet, dass** die Gasdiffusionselektrode (8) zum Anschluss an eine Gasquelle (14) für ein sauerstoffhaltiges Gas ausgebildet ist.

14. Verwendung eines Reaktors nach einem der Ansprüche 1 bis 13 zur elektrochemischen Behandlung einer Flüssigkeit mit
- Drehen der in die Flüssigkeit eintauchenden Elektrodenanordnung (7) um die ortsfeste Drehachse (11) gegenüber der Führung für die Flüssigkeit,
- wobei die Gegenelektrode (9), die Teil der Elektrodenanordnung (7) ist oder nicht, in die Flüssigkeit eingetaucht wird,
- wobei die scheibenförmige Gasdiffusionselektrode (8) der Elektrodenanordnung (7) vollständig in die Flüssigkeit eingetaucht wird und
- wobei über die Gasdiffusionselektrode (8) ein Prozessgas der elektrochemischen Behandlung zu- und/oder abgeführt wird.

## Claims

1. Reactor (1) for an electrochemical treatment of a liquid, comprising
- a guiding for the liquid through a reaction space (3),
- an electrode arrangement (7) in the reaction space (3),
- a counter electrode (9), which may or may not be part of the electrode arrangement (7), in the reaction space (3), and
- a rotation drive (12) designed to rotate the electrode arrangement (7) about a fixed rotation axis (11) relative to the guiding,
- wherein the reaction space (3) is enclosed by a reactor housing (2),
- wherein the electrode arrangement (7) comprises a disc-shaped gas diffusion electrode (8) which is designed and connected to supply and/or remove a process gas of the electrochemical treatment, and
- wherein the electrode arrangement (7) comprises a gas-carrying hollow shaft (10) which is connected on the one hand to a process gas connection (13, 15) and on the other hand to the gas diffusion electrode (8),
**characterized in that**
- **in that** the hollow shaft (10) is inclined relative to a horizontal (19) towards a liquid outlet (20).

2. Reactor (1) according to claim 1, **characterized in that** a filling level sensor (6) is designed and arranged to monitor a target filling level of the reactor vessel (2) with the liquid, which is above the gas diffusion electrode (8).

3. Reactor (1) according to claim 1 or 2, **characterized in that** the counter electrode (9) is arranged at a distance in the direction of the rotation axis (11) parallel to the gas diffusion electrode (8).

4. Reactor (1) according to any of the claims 1 to 3, **characterized in that** a semi-permeable membrane (21) is arranged between the gas diffusion electrode (8) and the counter electrode (9).

5. Reactor (1) according to claim 4, **characterized in that** the semi-permeable membrane (21) is formed as a coating on the gas diffusion electrode (8) and/or the counter electrode (9).

6. Reactor (1) according to any of the claims 1 to 5, **characterized in that** the gas diffusion electrode (8) and the counter electrode (9) are connected to electrical devices (16), wherein the electrical devices (16) are designed to apply or tap an external voltage between the gas diffusion electrode (8) and the counter electrode (9).

7. Reactor (1) according to any of the claims 1 to 6, **characterized in that** the counter electrode (9) is part of the electrode arrangement (7) and is arranged in a fixed position relative to the gas diffusion electrode (8).

8. Reactor (1) according to claim 7, if dependent on claim 6, **characterized in that** the electrical devices (16) are arranged in the hollow shaft (10).

9. Reactor (1) according to any of the claims 1 to 8, **characterized in that** several gas diffusion electrodes (8) and counter electrodes (9) are arranged alternately one behind the other in the direction of the rotation axis (11).

10. Reactor (1) according to any of the claims 1 to 9, **characterized in that** the counter electrode (9) is made of an electrically conductive plastic.

11. Reactor (1) according to any of the claims 1 to 10, **characterized in that** the guiding is designed and arranged to guide the liquid between the gas diffusion electrode (8) and the counter electrode (9).

12. Reactor (1) according to claim 11, **characterized in that** electrically non-conductive guiding elements (22) of the guiding engage between the gas diffusion electrode (8) and the counter electrode (9), which guiding elements extend radially with regard to the rotation axis (1).

13. Reactor (1) according to any of the claims 1 to 12, **characterized in that** the gas diffusion electrode (8) is designed for a connection to a gas source (14) for an oxygen-containing gas.

14. Use of a reactor according to any of the claims 1 to 13 for an electrochemical treatment of a liquid, comprising
- rotating the electrode arrangement (7) immersed in the liquid about the stationary rotation axis (11) relative to the guiding for the liquid,
- wherein the counter electrode (9), which may or may not be part of the electrode arrangement (7), is immersed in the liquid,
- wherein the disc-shaped gas diffusion electrode (8) of the electrode arrangement (7) is completely immersed in the liquid, and
- wherein a process gas for electrochemical treatment is supplied to and/or removed from the gas diffusion electrode (8).

## Revendications

1. Réacteur (1) pour le traitement électrochimique d'un liquide, comprenant
- un guide pour le liquide à travers une chambre de réaction (3),
- un agencement d'électrodes (7) dans la chambre de réaction (3),
- une contre-électrode (9) qui fait partie ou non de l'agencement d'électrodes (7) dans la chambre de réaction (3) et
- un entraînement rotatif (12) qui est conçu pour faire tourner l'agencement d'électrodes (7) autour d'un axe de rotation fixe (11) par rapport au guide,
- la chambre de réaction (3) étant entourée d'un boîtier de réacteur (2),
- l'agencement d'électrodes (7) comprenant une électrode de diffusion de gaz en forme de disque (8) qui est conçue et raccordée pour amener et/ou évacuer un gaz de processus du traitement électrochimique, et
- l'agencement d'électrodes (7) présentant un arbre creux (10) conduisant le gaz, qui est raccordé d'une part à un raccord de gaz de processus (13, 15) et d'autre part à l'électrode de diffusion de gaz (8),
**caractérisé en ce que**
- l'arbre creux (10) est incliné par rapport à une horizontale (19) vers un écoulement de liquide (20).

2. Réacteur (1) selon la revendication 1, **caractérisé en ce qu'**un capteur de niveau de remplissage (6) est conçu et agencé de manière à surveiller un niveau de remplissage cible du boîtier du réacteur (2) avec le liquide, qui se trouve au-dessus de l'électrode de diffusion de gaz (8).

3. Réacteur (1) selon la revendication 1 ou 2, **caractérisé en ce que** la contre-électrode (9) est agencée à une certaine distance dans la direction de l'axe de rotation (11) parallèlement à l'électrode de diffusion de gaz (8).

4. Réacteur (1) selon l'une des revendications 1 à 3, **caractérisé en ce qu'**une membrane semi-perméable (21) est agencée entre l'électrode de diffusion de gaz (8) et la contre-électrode (9).

5. Réacteur (1) selon la revendication 4, **caractérisé en ce que** la membrane semi-perméable (21) est conçue comme revêtement de l'électrode de diffusion de gaz (8) et/ou de la contre-électrode (9).

6. Réacteur (1) selon l'une des revendications 1 à 5, **caractérisé en ce que**
l'électrode de diffusion de gaz (8) et la contre-électrode (9) sont raccordées à des dispositifs électriques (16), les dispositifs électriques (16) étant conçus pour appliquer ou prélever une tension externe entre l'électrode de diffusion de gaz (8) et la contre-électrode (9).

7. Réacteur (1) selon l'une des revendications 1 à 6, **caractérisé en ce que**
la contre-électrode (9) fait partie de l'agencement d'électrodes (7) et est agencée de manière fixe par rapport à l'électrode de diffusion de gaz (8).

8. Réacteur (1) selon la revendication 7, si celle-ci est dépendante de la revendication 6, **caractérisé en ce que** les dispositifs électriques (16) sont agencés dans l'arbre creux (10).

9. Réacteur (1) selon l'une des revendications 1 à 8, **caractérisé en ce que**
plusieurs électrodes de diffusion de gaz (8) et contre-électrodes (9) sont agencées en alternance les unes derrière les autres dans la direction de l'axe de rotation (11).

10. Réacteur (1) selon l'une des revendications 1 à 9, **caractérisé en ce que** la contre-électrode (9) est réalisée en une matière plastique électriquement conductrice.

11. Réacteur (1) selon l'une des revendications 1 à 10, **caractérisé en ce que** le guide est conçu et agencé de manière à guider le liquide entre l'électrode de diffusion de gaz (8) et la contre-électrode (9).

12. Réacteur (1) selon la revendication 11, **caractérisé en ce que** des éléments de guidage (22) non électriquement conducteurs du guide s'engagent entre l'électrode de diffusion de gaz (8) et la contre-électrode (9), lesquels éléments de guidage s'étendent radialement par rapport à l'axe de rotation (11).

13. Réacteur (1) selon l'une des revendications 1 à 12, **caractérisé en ce que** l'électrode de diffusion de gaz (8) est conçue pour être raccordée à une source de gaz (14) pour un gaz contenant de l'oxygène.

14. Utilisation d'un réacteur selon l'une des revendications 1 à 13 pour le traitement électrochimique d'un liquide,
- rotation de l'agencement d'électrodes (7) plongeant dans le liquide autour de l'axe de rotation fixe (11) par rapport au guide pour le liquide,
- la contre-électrode (9), qui fait partie ou non de l'agencement d'électrodes (7), étant immergée dans le liquide,
- l'électrode de diffusion de gaz en forme de disque (8) de l'agencement d'électrodes (7) étant complètement immergée dans le liquide et
- un gaz de processus électrochimique étant acheminé vers et/ou évacué de l'électrode de diffusion de gaz (8).
